(19) Europäisches Patentamt
European Patent Office
Office européen des brevets

(11) **EP 3 664 103 A1**

(12) **EUROPEAN PATENT APPLICATION**

(43) Date of publication:
**10.06.2020 Bulletin 2020/24**

(51) Int Cl.:
**H01B 3/44** (2006.01)      **H01B 9/02** (2006.01)
**C08K 3/22** (2006.01)      **C08K 3/34** (2006.01)
**C08L 23/04** (2006.01)

(21) Application number: **19159634.5**

(22) Date of filing: **27.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.12.2018   KR 20180154933**

(71) Applicant: **LS Cable & System Ltd.**
**Anyang-si, Gyeonggi-do 14119 (KR)**

(72) Inventors:
• **JUNG, Hyun Jung**
  **15851 Gyeonggi-do (KR)**
• **NAM, Jin Ho**
  **06093 Seoul (KR)**
• **YOO, Jung Suk**
  **16656 Gyeonggi-do (KR)**
• **YANG, Yi Seul**
  **15815 Gyeonggi-do (KR)**
• **HEO, Sung Ik**
  **15874 Gyeonggi-do (KR)**

(74) Representative: **advotec.**
**Patent- und Rechtsanwälte**
**Widenmayerstrasse 4**
**80538 München (DE)**

(54) **HIGH VOLTAGE DIRECT CURRENT POWER CABLE**

(57)      Disclosed is an ultra-high-voltage direct-current power cable that is capable of simultaneously preventing or minimizing field enhancement and reductions in high-temperature volume resistance and direct-current dielectric strength due to accumulation of space charges in an insulator.

Fig. 1

EP 3 664 103 A1

**Description**

BACKGROUND OF THE INVENTION

Field of the Invention

The present invention relates to an ultra-high-voltage direct-current power cable. More particularly, the present invention relates to an ultra-high-voltage direct-current power cable that is capable of simultaneously preventing or minimizing field enhancement and reductions in high-temperature volume resistance and direct-current dielectric strength due to accumulation of space charges in an insulator.

Description of the Related Art

In general, for a large-sized power system, of which large-capacity and long-distance power transmission is required, high-voltage power transmission, for which power transmission voltage is increased, is essential in consideration of a reduction of power loss, free selection of a construction site, and an increase of power transmission capacity.

Power transmission schemes are basically classified into an alternating-current power transmission scheme and a direct-current power transmission scheme. The direct-current power transmission scheme is a scheme for transmitting direct-current electrical energy. Specifically, the direct-current power transmission scheme is a scheme in which a power transmission side changes alternating-current power into an appropriate voltage, converts the voltage into direct-current power using a forward conversion device, and transmits the direct-current power to a power reception side through a power transmission line, and the power reception side converts the direct-current power into alternating-current power using an inverse conversion device.

In particular, the direct-current power transmission scheme is advantageous in that it is possible to transmit large-capacity power a long distance and to connect asynchronous power systems to each other. In addition, direct current is characterized by lower power loss and higher stability than alternating current in the case of long-distance power transmission. As a result, the direct-current power transmission scheme has come to be widely used.

An insulator of an (ultra-)high-voltage direct-current power cable used in the direct-current power transmission scheme may be made of an insulation composition having insulating paper impregnated with insulating oil or a polyolefin resin as a base resin. In recent years, an insulator made of an insulation composition including a polyolefin resin, which is capable of enabling a cable to be used at relatively high temperatures, thereby increasing power transmission capacity, and which is free from worry about the leakage of insulating oil, has come to be widely used.

The polyolefin resin has a linear molecular chain structure, whereby the mechanical and thermal characteristics of the polyolefin resin are improved through cross-linking. For this reason, the polyolefin resin is applied to an insulating layer of a cable. However, a cross-linking agent is dissolved at the time of cross-linking. At this time, cross-linking byproducts are inevitably generated, and space charges are accumulated in the insulating layer of the cable due to the cross-linking byproducts. The space charges may enhance an electric field in the insulator of the (ultra-)high-voltage direct-current power cable, whereby dielectric breakdown may be caused at a voltage lower than the initially designed dielectric breakdown voltage.

Therefore, there is urgent necessity for an ultra-high-voltage direct-current power cable that is capable of simultaneously preventing or minimizing field enhancement and reductions in high-temperature volume resistance and direct-current dielectric strength due to accumulation of space charges in an insulator.

SUMMARY OF THE INVENTION

Therefore, the present invention has been made in view of the above problems, and it is an object of the present invention to provide an ultra-high-voltage direct-current power cable that is capable of simultaneously preventing or minimizing field enhancement and reductions in high-temperature volume resistance and direct-current dielectric strength due to accumulation of space charges in an insulator.

In accordance with the present invention, the above and other objects can be accomplished by the provision of an ultra-high-voltage direct-current power cable including a conductor formed by combining a plurality of wires, an inner semiconductive layer disposed so as to surround the conductor, an insulating layer disposed so as to surround the inner semiconductive layer, and an outer semiconductive layer disposed so as to surround the insulating layer, wherein the insulating layer is formed from an insulation composition including a polyolefin resin, inorganic particles, and a cross-linking agent, the insulating layer includes an inner layer, a middle layer, and an outer layer formed by dividing the thickness of the insulating layer into three equal parts, and the average value of total content of $\alpha$-cumyl alcohol (a-CA), acetophenone (AP), and $\alpha$-methyl styrene ($\alpha$-MS), among cross-linking byproducts included in the inner layer, total content of $\alpha$-cumyl alcohol ($\alpha$-CA), acetophenone (AP), and $\alpha$-methyl styrene ($\alpha$-MS), among cross-linking byproducts included in the middle layer, and total content of $\alpha$-cumyl alcohol ($\alpha$-CA), acetophenone (AP), and $\alpha$-methyl styrene ($\alpha$-MS), among cross-linking byproducts included in the outer layer, is 9,300 ppm or less.

The field enhancement factor (FEF), defined by Equation 1 below, may be 140 % or less.

[Equation 1]

$$FEF = (\text{maximally increased electric field in insulation sample/electric field applied to insulation sample}) * 100$$

In Equation 1 above,
the insulation sample is a sample manufactured through cross-linking of the insulation composition, from which the insulating layer is formed, and having a thickness of 100 to 200 $\mu$m,
the electric field applied to the insulation sample is a direct-current electric field applied to electrodes connected to opposite faces of the insulation sample, and is 20 to 50 kV/mm, and
the maximally increased electric field in the insulation sample is the maximum among increased electric field values when a direct-current electric field of 20 to 50 kV/mm is applied to the insulation sample for an hour.

When the average electric field is 20 kV/mm, the volume resistance of the insulating layer at 70 °C may be $1.0 \times 10^{15}$ $\Omega$·cm or more, the volume resistance of the insulating layer at 90 °C may be $1.0 \times 10^{14}$ $\Omega$·cm or more, and the reduction ratio of the volume resistance of the insulating layer at 90 °C to the volume resistance of the insulating layer at 70 °C may be 95 % or less.

The content of the cross-linking agent may be 0.1 wt% to less than 2 wt% based on the total weight of the insulation composition.

The content of the inorganic particles may be 0.01 to 10 wt% based on 100 wt% of the base resin.

The cross-linking agent may be a peroxide-based cross-linking agent.

The peroxide-based cross-linking agent may include at least one selected from the group consisting of dicumyl peroxide, benzoyl peroxide, lauroyl peroxide, t-butyl cumyl peroxide, di(t-butyl peroxy isopropyl) benzene, 2,5-dimethyl-2,5-di(t-butyl peroxy) hexane, and di-t-butyl peroxide.

Each of the inorganic particles may include at least one selected from the group consisting of aluminum silicate, calcium silicate, calcium carbonate, magnesium oxide, carbon nanotubes, and graphite.

The surface of each of the inorganic particles may be reformed with at least one surface reforming agent selected from the group consisting of vinyl silane, stearic acid, oleic acid, and amino polysiloxane.

BRIEF DESCRIPTION OF THE DRAWINGS

The above and other objects, features and other advantages of the present invention will be more clearly understood from the following detailed description taken in conjunction with the accompanying drawings, in which:

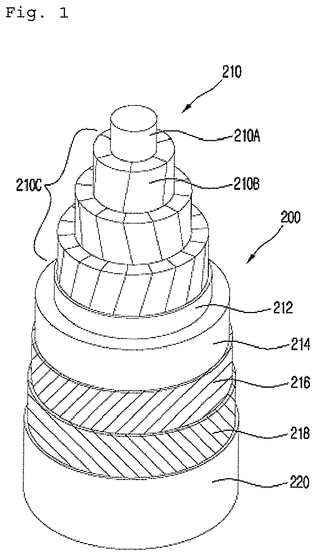

FIG. 1 is a longitudinal-sectional view schematically showing an ultra-high-voltage direct-current power cable according to the present invention.

DETAILED DESCRIPTION OF THE INVENTION

Hereinafter, preferred embodiments of the present invention will be described in detail with reference to the accompanying drawings. However, the present invention is not limited to the embodiments described herein and may be variously modified. The embodiments described herein are provided to allow those skilled in the art to thoroughly and completely understand the disclosed content and to sufficiently convey the scope of the present invention to those skilled in the art. In the drawings, the same or similar elements are denoted by the same reference numerals even when they are depicted in different drawings.

FIG. 1 is a longitudinal-sectional view schematically showing an ultra-high-voltage direct-current power cable according to the present invention.

Referring to FIG. 1, the power cable, denoted by reference numeral 200, includes a conductor 210 formed by combining a plurality of wires, an inner semiconductive layer 212 disposed so as to surround the conductor 210, an insulating layer 214 disposed so as to surround the inner semiconductive layer 212, and an outer semiconductive layer 216 disposed so as to surround the insulating layer 214, which together constitute a cable core unit configured to allow power to be transmitted along the conductor 210 and to prevent electric current from leaking in the radial direction of the cable.

The conductor 210 serves as a path along which electric current flows in order to transmit power. In order to minimize power loss, the conductor 210 may be made of a material that exhibits excellent conductivity and has strength and flexibility appropriate for manufacturing and using a cable, such as copper or aluminum. The conductor 210 may be a circular compressed conductor obtained by combining a plurality of circular wires and compressing the twisted wires into a circular shape or a straight angular conductor including a circular central wire 210A and straight angular wires 210B twisted so as to surround the circular central wire 210A, the straight angular conductor generally being configured to have a circular section. The straight angular conductor is advantageous in that the space factor of the straight angular conductor is higher than the space factor of the circular compressed conductor, whereby it is possible to reduce the outer diameter of a cable.

Since the conductor 210 is formed by combining a plurality of wires, however, the surface of the conductor 210 is not flat, whereby an electric field may be nonuniform, and corona discharge may easily occur in portions thereof. In addition, if a gap is formed between the surface of the conductor 210 and the insulating layer 214, a description of which will follow, insulating performance may be reduced. In order to solve this problem, the inner semiconductive layer 212 may be disposed outside the conductor 210, and a watertight compound may be provided between the twisted wires, which constitute the conductor 210, or watertight tape may be provided between the conductor 210 and the inner semiconductive layer 212 in order to further realize a conductor waterproofing function.

The inner semiconductive layer 212 is configured such that conductive particles, such as carbon black, carbon nanotubes, carbon nanoplates, or graphite, are added to an insulative material, whereby the inner semiconductive layer 212 exhibits semiconductivity. The inner semiconductive layer 212 prevents an electric field from abruptly changing between the conductor 210 and the insulating layer 214, a description of which will follow, thereby stabilizing insulating performance. In addition, the inner semiconductive layer 212 inhibits nonuniform distribution of electric charges on the surface of the conductor, thereby making the electric field uniform. Furthermore, the inner semiconductive layer 212 prevents a gap from being formed between the conductor 210 and the insulating layer 214, thereby restraining corona discharge, dielectric breakdown, etc.

The insulating layer 214 is provided outside the inner semiconductive layer 212 in order to electrically insulate the conductor 210 such that electric current flowing along the conductor 210 is prevented from leaking to the outside. In general, it is necessary for the breakdown voltage of the insulating layer 214 to be high and for the insulating performance of the insulating layer 214 to be stably maintained for a long time. Furthermore, it is necessary for the insulating layer 214 to have low dielectric loss and high heat resistance. Consequently, the insulating layer 214 may be made of a polyolefin resin, such as polyethylene or polypropylene, preferably polyethylene. Here, the polyethylene resin may be a cross-linking resin.

The outer semiconductive layer 216 is provided outside the insulating layer 214. In the same manner as for the inner semiconductive layer 212, the outer semiconductive layer 216 is configured such that conductive particles, such as carbon black, carbon nanotubes, carbon nanoplates, or graphite, are added to an insulative material, whereby the outer semiconductive layer 216 exhibits semiconductivity. The outer semiconductive layer 216 restrains nonuniform distribution of electric charges between the insulating layer 214 and a metal sheath layer 218, a description of which will follow, thereby stabilizing insulating performance. In addition, the outer semiconductive layer 216 smooths the surface of the insulating layer 214 of the cable in order to alleviate the concentration of an electric field, thereby preventing corona discharge and physically protecting the insulating layer 214.

The cable core unit, particularly the inner semiconductive layer 212, the insulating layer 214, and the outer semiconductive layer 216 are parts in which the electric field may be enhanced and thus dielectric breakdown may occur due to the generation, accumulation, and injection of space charges, a detailed description of which will follow.

The core unit may further include a moisture absorption layer for preventing moisture from permeating into the cable. The moisture absorption layer may be provided between the twisted wires and/or outside the conductor 210. The moisture absorption layer is configured in the form of powder, tape, coating layer, or film, including a super absorbent polymer (SAP) that is capable of rapidly absorbing moisture that has permeated into the cable and reliably maintaining the state in which moisture is absorbed, in order to prevent moisture from permeating into the cable in the longitudinal direction of the cable. In addition, the moisture absorption layer may be semiconductive in order to prevent an electric field from abruptly changing.

A protective sheath unit is provided outside the core unit. A power cable installed in an environment that is constantly exposed to moisture, such as a seabed, further includes an armor unit. The protective sheath unit and the armor unit protect the cable core unit from various environmental factors that may affect the power transmission performance of the cable, such as the permeation of moisture, mechanical damage, and corrosion.

The protective sheath unit includes a metal sheath layer 218 and an inner sheath 220, and protects the cable core unit from fault current, external force, and other external environmental factors.

The metal sheath layer 218 is grounded to the end of the power cable so as to serve as a path along which fault current flows when a fault, such as an earth fault or a short circuit, occurs. The metal sheath layer 218 may protect the cable from external impacts, and may prevent an electric field from being discharged out of the cable. Also, in the case of a cable installed in a specific environment, such as a seabed, the metal sheath layer 218 is formed so as to seal the core unit, thereby preventing insulating performance from being reduced due to the permeation of foreign matter such as moisture. For example, molten metal may be extruded to the outside of the core unit so as to have a continuous outer surface, i.e. a seamless outer surface, thereby realizing excellent water-barrier performance. Lead or aluminum may be used as the metal. Particularly, in the case of a submarine cable, lead may be used, since lead exhibits excellent corrosion resistance to seawater. In order to supplement the mechanical properties of the cable, a lead alloy having a metal element added thereto may be used.

In addition, an anticorrosion compound, such as blown asphalt, may be applied to the surface of the metal sheath layer 218 in order to further improve the corrosion resistance and water barrier property of the cable and to increase the force of adhesion with the inner sheath 220. Additionally, copper wire direct-input tape (not shown) or a moisture absorption layer may be further provided between the metal sheath layer 218 and the core unit. The copper wire direct-input tape includes a copper wire and non-woven fabric tape, and allows smooth electrical contact between the outer semiconductive layer 216 and the metal sheath layer 218. The moisture absorption layer is configured in the form of powder, tape, coating layer, or film, including a super absorbent polymer (SAP) that is capable of rapidly absorbing moisture that has permeated into the cable and reliably maintaining the state in which moisture is absorbed, in order to prevent moisture from permeating into the cable in the longitudinal direction of the cable. In addition, the moisture absorption layer may include a copper wire in order to prevent an electric field in the moisture absorption layer from abruptly changing.

The inner sheath 220, which is made of a resin, such as polyvinyl chloride (PVC) or polyethylene, may be provided outside the metal sheath layer 218 in order to improve the corrosion resistance and water barrier property of the cable and to protect the cable from various other environmental factors, such as mechanical damage, heat, and ultraviolet rays. Particularly, in the case of a power cable installed on a seabed, polyethylene, which exhibits an excellent water barrier property, may be used. In an environment requiring non-flammability, polyvinyl chloride or a non-flammable polyolefin compound may be used.

The protective sheath unit may further include a metal reinforcement layer, made of semiconductive non-woven fabric tape for absorbing external force applied to the power cable, and an outer sheath, made of polyvinyl chloride or polyethylene, in order to further improve the corrosion resistance and water barrier property of the power cable and to further protect the cable from various other environmental factors, such as mechanical damage, heat, and ultraviolet rays.

In addition, the power cable installed on the seabed may be easily damaged by anchors of vessels, and may also be damaged due to bending force caused by ocean currents or waves and frictional force with the bottom of the sea. In order to prevent such damage, an armor unit may be formed outside the protective sheath unit.

The armor unit may include an armor layer and a subbing layer. The armor layer may be formed by spirally winding a wire, made of steel, zinc-plated steel, copper, brass, or bronze and having a circular or straight angular sectional shape, so as to have at least one layered structure. The armor layer not only strengthens the mechanical properties and performance of the cable but also further protects the cable from external force. The subbing layer, which is made of polypropylene yarn, may be formed at the upper part and/or the lower part of the armor layer so as to have at least one layered structure in order to protect the cable. The outermost subbing layer may be made of two or more kinds of materials having different colors in order to guarantee the visibility of the cable installed on the seabed.

Each of the inner semiconductive layer 212 and the outer semiconductive layer 216 is formed by extruding a semiconductive composition configured such that conductive particles, such as carbon black, carbon nanotubes, carbon nanoplates, or graphite, are dispersed in a base resin and such that a cross-linking agent, an antioxidant, a scorch retarder, etc. are additionally added to the base resin.

Here, an olefin-based resin, similar to the base resin of the insulation composition, from which the insulating layer 214 is formed, may be used as the base resin in order to increase the force of adhesion between each of the semiconductive layers 212 and 216 and the insulating layer 214. Specifically, olefin and a polar monomer, such as ethylene vinyl acetate (EVA), ethylene methyl acrylate (EMA), ethylene methyl methacrylate (EMMA), ethylene ethyl acrylate (EEA), ethylene ethyl methacrylate (EEMA), ethylene (iso)propyl acrylate (EPA), ethylene (iso)propyl methacrylate (EPMA), ethylene butyl acrylate (EBA), or ethylene butyl methacrylate (EBMA), may be used as the base resin in consideration of compatibility with the conductive particles.

The cross-linking agent may be a silane-based cross-linking agent or an organic peroxide-based cross-linking agent, such as dicumyl peroxide, benzoyl peroxide, lauroyl peroxide, t-butyl cumyl peroxide, di(t-butyl peroxy isopropyl) benzene, 2,5-dimethyl-2,5-di(t-butyl peroxy) hexane, or di-t-butyl peroxide, depending on the cross-linking scheme of the base resin included in each of the semiconductive layers 212 and 216.

The semiconductive composition, which forms the inner and outer semiconductive layers 212 and 216, may include 45 to 70 wt% of conductive particles, such as carbon black, based on 100 wt% of the base resin thereof. If the content of the conductive particles is less than 45 wt%, sufficient semiconductive characteristics are not realized. If the content of the conductive particles is more than 70 wt%, on the other hand, the extent of extrusion of the inner and outer semiconductive layers 212 and 216 is reduced, whereby surface characteristics are deteriorated or the productivity of a cable is reduced.

Also, in the semiconductive composition, which forms the inner and outer semiconductive layers 212 and 216, the content of the cross-linking agent may be accurately adjusted so as to become 0.1 to 5 wt%, preferably 0.1 to 1.5 wt%, based on 100 wt% of the base resin.

If the content of the cross-linking agent is more than 5 wt%, the content of cross-linking byproducts, inevitably generated at the time of cross-linking of the base resin included in the semiconductive composition, becomes excessive. The cross-linking byproducts move into the insulating layer 214 via the interface between each of the semiconductive layers 212 and 216 and the insulating layer 214, whereby heterocharges are accumulated. As a result, field enhancement is increased, and therefore the high-temperature volume resistance and the dielectric breakdown voltage of the insulating layer 214 are reduced. If the content of the cross-linking agent is less than 0.1 wt%, on the other hand, the extent of cross-linking is insufficient, whereby the mechanical properties, heat resistance, etc. of each of the semiconductive layers 212 and 216 may be reduced.

The insulating layer 214 may include, for example, a polyolefin resin, such as polyethylene or polypropylene, preferably polyethylene, as the base resin. The insulating layer 214 may be formed by extruding an insulation composition including inorganic particles and a cross-linking agent.

The polyethylene resin may be ultra-low-density polyethylene (ULDPE), low-density polyethylene (LDPE), linear low-density polyethylene (LLDPE), middle-density polyethylene (MDPE), high-density polyethylene (HDPE), or a combination thereof. In addition, the polyethylene resin may be a homopolymer, ethylene and propylene, a random or block copolymer with $\alpha$-olefin, such as 1-butene, 1-pentene, 1-hexene, or 1-octene, or a combination thereof.

In addition, the insulation composition, from which the insulating layer 214 is formed, may include a cross-linking agent. Consequently, the insulating layer 214 may be made of cross-linking polyolefin (XLPO), preferably cross-linking polyethylene (XLPE), through an additional cross-linking process during or after extrusion of the insulation composition. In addition, the insulation composition may further include other additives, such as an antioxidant, an extrusion improving agent, and a cross-linking co-agent.

The cross-linking agent included in the insulation composition may be the same as the cross-linking agent included in the semiconductive composition. For example, the cross-linking agent may be a silane-based cross-linking agent or an organic peroxide-based cross-linking agent, such as dicumyl peroxide, benzoyl peroxide, lauroyl peroxide, t-butyl cumyl peroxide, di(t-butyl peroxy isopropyl) benzene, 2,5-dimethyl-2,5-di(t-butyl peroxy) hexane, or di-t-butyl peroxide, depending on the cross-linking scheme of polyolefin. Here, the cross-linking agent included in the insulation composition may be included so as to account for less than 2 wt%, for example, 0.1 wt% to less than 2 wt%, based on the total weight of the insulation composition.

Nano-scale aluminum silicate, calcium silicate, calcium carbonate, magnesium oxide, carbon nanotubes, or graphite may be used as the inorganic particles included in the insulation composition. However, magnesium oxide may be used as the inorganic particles in consideration of the impulse strength of the insulating layer 214. Magnesium oxide may be acquired from natural ore. Alternatively, magnesium oxide may be manufactured from an artificial synthetic raw material using magnesium salt in seawater. In this case, it is possible to supply a material of a high degree of purity that is stable quality and exhibits desired physical properties.

Basically, magnesium oxide has a face centered cubic crystalline structure. However, magnesium oxide may have various shapes, degrees of purity, degrees of crystallization, physical properties, etc. depending on the method of synthesis. Specifically, magnesium oxide may have a cubic shape, a terraced shape, a rod shape, a porous shape, or a spherical shape. Magnesium oxide may be variously used depending on the respective specific physical properties thereof. Magnesium oxide forms a potential well at the interface between the based resin and the inorganic particles, thereby restraining the movement of electrical charges and the accumulation of space charges.

In addition, carbon nanoparticles including graphite or carbon nanotubes may also have various shapes, and may remove space charges generated in the ultra-high-voltage direct-current power cable while maintaining insulating performance, and may minimize a dielectric voltage reduction phenomenon in which dielectric breakdown is caused at a lower voltage than the initially designed dielectric breakdown voltage in the insulator of the ultra-high-voltage direct-current power cable through the removal of the space charges. In particular, a portion of the carbonized graphite nanofibers is not electrically connected due to a remaining PAN structure thereof, whereby insulativity is maintained. In addition, polarization is sufficiently achieved in part by an external electric field through the graphite structure, whereby the function of a trap site that is capable of removing space charges may be performed.

The inorganic particles, including magnesium oxide, forms a potential well at the interface between the base resin and the inorganic particles when an electric field is applied to the cable, thereby restraining the movement of electrical charges and the accumulation of space charges.

The surface of each of the inorganic particles, including magnesium oxide, may be reformed with vinyl silane, stearic acid, oleic acid, or amino polysiloxane. In general, each of the inorganic particles, such as magnesium oxide, has a high surface energy and is hydrophilic, whereas the base resin, such as polyethylene, has a low surface energy and is hydrophobic. For these reasons, the degree of dispersion of the inorganic particles, such as magnesium oxide, in the base resin, such as polyethylene, may be low, and the electrical properties thereof may be adversely affected. In order to solve this problem, therefore, it is necessary to reform the surface of each of the inorganic particles, such as magnesium oxide.

If the surface of each of the inorganic particles, such as magnesium oxide, is not reformed, a gap is formed between the inorganic particles and the base resin, such as polyethylene, whereby mechanical properties may be deteriorated, and electrical insulating characteristics, such as dielectric breakdown strength, may be deteriorated. On the other hand, in the case in which each of the inorganic particles, such as magnesium oxide, is reformed with vinyl silane, the degree of dispersion of the inorganic particles in the base resin, such as polyethylene, is increased, and electrical characteristics are improved. A hydrolysis group, such as vinyl silane, is chemically coupled to the surface of magnesium oxide through condensation, whereby the surface of each of the inorganic particles is reformed. As a result, the silane group of the inorganic particles, the surface of each of which has been reformed with vinyl silane, reacts with the base resin, such as polyethylene, whereby an excellent degree of dispersion is guaranteed.

In addition, each of the inorganic particles, such as magnesium oxide, may have a single crystalline shape or a polycrystalline shape, and may be included in the insulation composition so as to account for 0.01 to 10 wt% based on 100 wt% of the base resin. If the content of the inorganic particles is less than 0.01 wt%, the effect of reducing the accumulation of space charges may be insufficient. If the content of the inorganic particles is more than 10 wt%, on the other hand, impulse strength, mechanical properties, and extent of continuous extrusion may be reduced.

The inventors of the present application have experimentally found that specific cross-linking byproducts that causes the generation of space charges, among cross-linking byproducts, inevitably generated at the time of cross-linking of the insulating layer 214, are $\alpha$-cumyl alcohol ($\alpha$-CA), acetophenone (AP), and $\alpha$-methyl styrene ($\alpha$-MS), and have also experimentally found that, in the case in which the content of the cross-linking agent included in the insulation composition, from which the insulating layer 214 is formed, is limited to less than 2 wt% and the content of the inorganic particles is limited to less than 10 wt%, the degree of the inorganic particles in the base resin is maximized, that it is possible to limit the content of the specific cross-linking byproducts through degassing after cross-linking of the insulating layer 214, in particular, that it is possible to limit the content of the specific cross-linking byproducts for respective positions of the thickness of the insulating layer, and that it is possible to remarkably reduce the generation of space charges and field enhancement by limiting the content of the specific cross-linking byproducts, whereby it is possible to simultaneously prevent or minimize reductions in the high-temperature volume resistance and direct-current dielectric strength of the insulating layer 214. The present invention has been completed based on these findings.

Specifically, in the case in which the thickness of the insulating layer 214 is divided into three equal parts such that the insulating layer 214 includes an inner layer disposed directly on the conductor 210, a middle layer disposed on the inner layer, and an outer layer disposed on the middle layer, the layer-based average value of the total content of the three specific cross-linking byproducts included in the respective layers is adjusted to 9,300 ppm or less, whereby the generation of space charges in the insulating layer 214 is inhibited. Consequently, the field enhancement factor (FEF), defined by Equation 1 below, which indicates the degree of field enhancement in the insulating layer 214, is adjusted to about 140 % or less, for example, 100 to 140 %, whereby it is possible to simultaneously prevent or minimize reductions in the high-temperature volume resistance and direct-current dielectric strength of the insulating layer 214.

[Equation 1]

FEF = (maximally increased electric field in insulation sample/electric field applied to insulation sample)*100

In Equation 1 above,
the insulation sample is a sample manufactured through cross-linking of the insulation composition, from which the insulating layer 214 is formed, and having a thickness of 100 to 200 $\mu$m,
the electric field applied to the insulation sample is a direct-current electric field applied to electrodes connected to opposite faces of the insulation sample, and is 20 to 50 kV/mm, and
the maximally increased electric field in the insulation sample is the maximum among increased electric field values when a direct-current electric field of 20 to 50 kV/mm is applied to the insulation sample for an hour.

Consequently, when the average electric field is 20 kV/mm, the high-temperature volume resistance of the insulating layer 214, for example, the volume resistance of the insulating layer 214 at 70 °C is $1.0\times10^{15}$ $\Omega\cdot$cm or more, the volume resistance of the insulating layer 214 at 90 °C is $1.0\times10^{14}$ $\Omega\cdot$cm or more, and particularly the reduction ratio of the volume resistance of the insulating layer 214 at 90 °C to the volume resistance of the insulating layer 214 at 70 °C, i.e. {(volume resistance of insulating layer at 70 °C - volume resistance of insulating layer at 90 °C)/ volume resistance of insulating layer at 70 °C}$\times$ 100, is 100 % or less, preferably 95 % or less, whereby a reduction in the high-temperature volume resistance is minimized, and therefore it is possible to prevent or minimize a reduction in direct-current dielectric strength.

[Examples]

1. Manufacture Example of cables

Cables according to Examples and Comparative Examples, each of which included an inner semiconductor layer, an insulating layer, and an outer semiconductor layer, and in each of which the content of cross-linking agents added to the insulating layer and the content of inorganic particles added to the insulating layer were adjusted such that the layer-based average values of the content of respective cross-linking byproducts in an inner layer, a middle layer, and an outer layer of the insulating layer formed by dividing the thickness of the insulating layer into three equal parts were adjusted as shown in Table 1 below, were manufactured. Samples were extracted from arbitrary middle points of the respective layers of the cables in order to measure the content of the cross-linking byproducts.

[Table 1]

|  |  | Content of cross-linking by products (ppm) | | | |
|---|---|---|---|---|---|
|  |  | $\alpha$-CA | AP | $\alpha$-MS | Total sum |
| Example 1 | Average | 6567 | 2582 | 74 | 9224 |
| Example 2 | Average | 6418 | 2642 | 75 | 9135 |
| Example 3 | Average | 6026 | 2419 | 12 | 8456 |
| Comparative Example 1 | Average | 6782 | 2928 | 72 | 9782 |
| Comparative Example 2 | Average | 6665 | 3157 | 89 | 9911 |
| Comparative Example 3 | Average | 6565 | 2969 | 79 | 9613 |

2. Evaluation of volume resistance

Insulation samples, each having a thickness of about 170 $\mu$m, were extracted from the insulating layers of the cables according to Examples and Comparative Examples, and the volume resistance of the insulation samples at specific temperatures was measured for 24 hours while a direct-current electric field of 20 kV/mm was applied to the insulation samples through electrodes manufactured according to the ASTM D 257 Standard. The results of measurement are shown in Table 2 below.

[Table 2]

|  | Volume resistance of insulation samples at specific temperatures | | | |
|---|---|---|---|---|
|  | 25°C | 50°C | 70°C | 90°C |
| Example 1 | 1.4548E+18 | 3.6285E+17 | 9.1698E+16 | 3.0254E+16 |
| Example 2 | 1.0793E+17 | 4.4218E+16 | 1.1481E+15 | 2.4650E+14 |
| Example 3 | 1.7669E+17 | 5.8699E+15 | 9.3909E+15 | 2.6614E+15 |
| Comparative Example 1 | 3.5186E+17 | 2.6595E+16 | 1.0000E+14 | 7.5039E+13 |
| Comparative Example 2 | 1.5955E+17 | 1.4241E+16 | 1.0482E+15 | 1.2053E+14 |
| Comparative Example 3 | 5.6266E+17 | 4.6806E+15 | 4.1431E+14 | 1.6171E+13 |

It can be seen from Table 2 above that, in the case of the insulation samples according to Comparative Examples 1 to 3, in which the content of the three specific cross-linking byproducts was not adjusted, the high-temperature volume resistance of the insulation samples was greatly reduced due to field enhancement caused by the generation of space charges, from which it was presumed that dielectric strength would be greatly reduced.

In contrast, in the case of the insulation samples according to Examples 1 to 3, in which the content of the three specific cross-linking byproducts was accurately adjusted, the generation of space charges was inhibited, whereby a reduction in high-temperature volume resistance, indicating field enhancement, was minimized.

As is apparent from the above description, the ultra-high-voltage direct-current power cable according to the present invention has an excellent effect in that the content of specific cross-linking byproducts generated at the time of cross-linking is accurately controlled by adjusting the content of the cross-linking agent added to the insulation composition, from which the insulating layer is formed, and by adjusting the extent of cross-linking through appropriate reforming of the base resin, whereby it is possible to simultaneously prevent or minimize field enhancement and reductions in high-temperature volume resistance and direct-current dielectric strength due to accumulation of space charges in the insulator.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. An ultra-high-voltage direct-current power cable comprising:

    a conductor formed by combining a plurality of wires;
    an inner semiconductive layer disposed so as to surround the conductor;
    an insulating layer disposed so as to surround the inner semiconductive layer; and
    an outer semiconductive layer disposed so as to surround the insulating layer, wherein
    the insulating layer is formed from an insulation composition comprising a polyolefin resin, inorganic particles, and a cross-linking agent,
    the insulating layer comprises an inner layer, a middle layer, and an outer layer formed by dividing a thickness of the insulating layer into three equal parts, and
    an average value of total content of $\alpha$-cumyl alcohol ($\alpha$-CA), acetophenone (AP), and $\alpha$-methyl styrene ($\alpha$-MS), among cross-linking byproducts included in the inner layer, total content of $\alpha$-cumyl alcohol ($\alpha$-CA), acetophenone (AP), and $\alpha$-methyl styrene ($\alpha$-MS), among cross-linking byproducts included in the middle layer, and total content of $\alpha$-cumyl alcohol ($\alpha$-CA), acetophenone (AP), and $\alpha$-methyl styrene ($\alpha$-MS), among cross-linking byproducts included in the outer layer, is 9,300 ppm or less.

2. The ultra-high-voltage direct-current power cable according to claim 1, wherein a field enhancement factor (FEF), defined by Equation 1 below, is 140 % or less.

    [Equation 1]

    FEF = (maximally increased electric field in insulation sample/electric field applied to insulation sample)*100

    In Equation 1 above,
    the insulation sample is a sample manufactured through cross-linking of the insulation composition, from which the insulating layer is formed, and having a thickness of 100 to 200 $\mu$m,
    the electric field applied to the insulation sample is a direct-current electric field applied to electrodes connected to opposite faces of the insulation sample, and is 20 to 50 kV/mm, and
    the maximally increased electric field in the insulation sample is a maximum among increased electric field values when a direct-current electric field of 20 to 50 kV/mm is applied to the insulation sample for an hour.

3. The ultra-high-voltage direct-current power cable according to claim 1 or 2, wherein, when an average electric field is 20 kV/mm, volume resistance of the insulating layer at 70 °C is $1.0 \times 10^{15}$ Ω·cm or more, volume resistance of the insulating layer at 90 °C is $1.0 \times 10^{14}$ Ω·cm or more, and a reduction ratio of the volume resistance of the insulating layer at 90 °C to the volume resistance of the insulating layer at 70 °C is 95 % or less.

4. The ultra-high-voltage direct-current power cable according to any one of claims 1 to 3, wherein a content of the cross-linking agent is 0.1 wt% to less than 2 wt% based on a total weight of the insulation composition.

5. The ultra-high-voltage direct-current power cable according to any one of claims 1 to 4, wherein a content of the inorganic particles is 0.01 to 10 wt% based on 100 wt% of the base resin.

6. The ultra-high-voltage direct-current power cable according to any one of claims 1 to 5, wherein the cross-linking agent is a peroxide-based cross-linking agent.

7. The ultra-high-voltage direct-current power cable according to claim 6, wherein the peroxide-based cross-linking agent comprises at least one selected from a group consisting of dicumyl peroxide, benzoyl peroxide, lauroyl peroxide, t-butyl cumyl peroxide, di(t-butyl peroxy isopropyl) benzene, 2,5-dimethyl-2,5-di(t-butyl peroxy) hexane, and di-t-butyl peroxide.

8. The ultra-high-voltage direct-current power cable according to any one of claims 1 to 7, wherein each of the inorganic particles comprises at least one selected from a group consisting of aluminum silicate, calcium silicate, calcium carbonate, magnesium oxide, carbon nanotubes, and graphite.

9. The ultra-high-voltage direct-current power cable according to any one of claims 1 to 8, wherein a surface of each of the inorganic particles is reformed with at least one surface reforming agent selected from a group consisting of vinyl silane, stearic acid, oleic acid, and amino polysiloxane.

Fig. 1

Europäisches
Patentamt

European
Patent Office

Office européen
des brevets

# EUROPEAN SEARCH REPORT

Application Number

EP 19 15 9634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/128147 A1 (BOREALIS AG [AT]; NILSSON ULF [SE] ET AL.) 20 October 2011 (2011-10-20) * page 31, line 20 - line 31; claims 1-22; examples 1-5 * | 1-9 | INV. H01B3/44 H01B9/02 ADD. C08K3/22 C08K3/34 C08L23/04 |
| Y | EP 2 711 933 A1 (LS CABLE & SYSTEM LTD [KR]) 26 March 2014 (2014-03-26) * paragraph [0063]; claims 1-10; example 1; tables 1-3 * | 1-9 | |
| Y | KR 101 318 457 B1 (LS CABLE & SYSTEM LTD [KR]) 16 October 2013 (2013-10-16) * claims 1-8; example 1 * | 1-9 | |
| Y | EP 3 047 490 B1 (DOW GLOBAL TECHNOLOGIES LLC [US]) 23 August 2017 (2017-08-23) * paragraph [0032] - paragraph [0046]; claims 1-10; tables 1-4 * | 1-9 | |

TECHNICAL FIELDS
SEARCHED      (IPC)

H01B
C08K
C08L

The present search report has been drawn up for all claims

| Place of search | Date of completion of the search | Examiner |
|---|---|---|
| Munich | 6 September 2019 | Marsitzky, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 9634

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2019

| Patent document cited in search report | | Publication date | Patent family member(s) | | Publication date |
|---|---|---|---|---|---|
| WO 2011128147 | A1 | 20-10-2011 | BR 112012025926 | A2 | 28-06-2016 |
| | | | CN 102939331 | A | 20-02-2013 |
| | | | EP 2558523 | A1 | 20-02-2013 |
| | | | KR 20130057993 | A | 03-06-2013 |
| | | | US 2013199817 | A1 | 08-08-2013 |
| | | | WO 2011128147 | A1 | 20-10-2011 |
| EP 2711933 | A1 | 26-03-2014 | EP 2711933 | A1 | 26-03-2014 |
| | | | KR 101318481 | B1 | 16-10-2013 |
| | | | US 2014076609 | A1 | 20-03-2014 |
| KR 101318457 | B1 | 16-10-2013 | NONE | | |
| EP 3047490 | B1 | 23-08-2017 | CA 2923072 | A1 | 26-03-2015 |
| | | | CN 105493202 | A | 13-04-2016 |
| | | | EP 3047490 | A1 | 27-07-2016 |
| | | | JP 2016536768 | A | 24-11-2016 |
| | | | KR 20160058124 | A | 24-05-2016 |
| | | | TW 201517064 | A | 01-05-2015 |
| | | | US 2016225490 | A1 | 04-08-2016 |
| | | | WO 2015041885 | A1 | 26-03-2015 |

EPO FORM P0459

For more details about this annex : see Official Journal of the European Patent Office, No. 12/82